# FASCICULE DE BREVET EUROPEEN

(11) **EP 2 036 451 B1**
(45) Date de publication et mention de la délivrance du brevet: **23.12.2009**
(21) Numéro de dépôt: 08163567.4
(22) Date de dépôt: 03.09.2008
(51) Int. Cl.: A44B 11/25, B60R 22/18

(54) **Pêne retour de sangle à carter non projetable, pour une ceinture de sécurité à trois points de véhicule automobile**
Nicht projektierbarer Schnappriegel eines Gurts mit Gehäuse für einen Dreipunktesicherheitsgurt eines Kraftfahrzeugs
Webbing return bolt with non-projecting case, for a three-point seatbelt of an automobile

(30) Priorité: 14.09.2007 FR 0757618
(43) Date de publication de la demande: 18.03.2009
(73) Titulaire: Peugeot Citroën Automobiles SA, 78140 Vélizy Villacoublay (FR)
(72) Inventeur: Oudart, Fabrice, 25700 Valentigney (FR)
(74) Mandataire: Vigand, Régis Louis Michel

(56) Documents cités:
- EP-A- 0 909 683
- EP-A- 1 652 442
- EP-A- 1 680 971

## Description

L'invention concerne les ceintures de sécurité à trois points, et plus précisément les pênes dits « retour de sangle » qui sont parfois utilisés dans certaines ceintures de ce type.

Un pêne selon le préambule de la revendication 1 est décrit dans le brevet EP 1 680 971.

De nombreux véhicules automobiles sont équipés de ceintures de sécurité à trois points. Parmi ces ceintures de sécurité, certaines équipent un siège ou une partie de banquette qui est implanté(e) en position centrale (et donc encadré(e) par deux autres sièges ou parties de banquette), ou bien en position latérale. La ceinture qui équipe un tel siège central doit alors comporter ce que l'homme de l'art appelle une « boucle ceinture droite » (ou première boucle) et une « boucle ceinture gauche » (ou seconde boucle) placées de part et d'autre du siège central. Ceci est également valable dans le cas d'un siège latéral où il y a deux brins de boucle de part et d'autre de l'assise. L'une de ces deux boucles (par exemple la première) sert de point d'ancrage fixe à ce que l'homme de l'art appelle un « pêne retour de sangle », tandis que l'autre boucle (par exemple la seconde) sert de point d'ancrage temporaire à un « pêne extractible ».

Le pêne extractible est le composant de la ceinture de sécurité dans lequel coulisse la sangle de la ceinture et qui est introduit par un passager dans la seconde boucle (qui comporte un mécanisme de verrouillage amovible) afin de s'attacher temporairement sur son siège.

Le pêne retour de sangle est le composant de la ceinture de sécurité qui est concerné par l'invention. Il comprend, d'une part, une âme comportant une première portion destinée à être solidarisée fixement à la première boucle et une seconde portion destinée à être solidarisée à l'une des deux extrémités de la sangle de la ceinture (l'autre étant solidarisée à l'enrouleur automatique), et d'autre part, un carter comprenant des première et seconde parties séparées destinées, une fois réunies l'une à l'autre de façon réversible, à emprisonner conjointement la seconde portion d'âme et donc à cacher l'extrémité (ou retour) de sangle. La première partie du carter comporte une ouverture destinée à permettre le passage de l'extrémité de sangle.

Lorsque le véhicule fait l'objet d'un choc, la tension de la sangle peut entraîner la séparation (ou désolidarisation) des première et seconde parties du carter. La première partie du carter demeure alors couplée à la sangle du fait que cette dernière traverse son ouverture. Elle ne pose donc pas de problème. En revanche, la seconde partie du carter n'étant plus retenue, elle peut être projetée dans l'habitacle et peut alors heurter un passager.

L'invention a donc pour but de remédier à cet inconvénient.

Elle propose à cet effet un pêne retour de sangle, pour une extrémité de sangle de ceinture de sécurité à trois points, comprenant une âme comportant une portion destinée à être solidarisée à l'extrémité de sangle et un carter comprenant des première et seconde parties destinées à emprisonner conjointement la portion d'âme, la première partie comportant une ouverture destinée à permettre le passage de l'extrémité de sangle.

Ce pêne retour de sangle se caractérise par le fait que son carter comprend en outre des moyens de liaison flexibles (ou souples) qui joignent entre elles, de façon permanente, les première et seconde parties de sorte qu'elles demeurent rattachées l'une à l'autre tout en étant couplées à la sangle en cas de choc.

Le pêne selon l'invention peut comporter d'autres caractéristiques qui peuvent être prises séparément ou en combinaison, et notamment :
- les moyens de liaison peuvent être agencés de manière à être logés intégralement à l'intérieur du carter lorsque ce dernier emprisonne la portion d'âme ;
- les moyens de liaison peuvent comprendre au moins une charnière, et par exemple deux ;
   ➢ chaque charnière peut comprendre deux extrémités solidarisées respectivement à des parties d'extrémité des première et seconde parties du carter ;
   ➢ chaque extrémité de charnière peut être solidarisée à une face interne de la partie d'extrémité de la première ou seconde partie du carter ;
- le carter peut être un élément monobloc réalisé en matière plastique ;
- en cas de choc c'est de préférence la première partie qui est couplée à la sangle via son ouverture.

L'invention propose également une ceinture de sécurité à trois points comprenant une sangle munie d'une extrémité solidarisée à un pêne du type de celui présenté ci-avant.

D'autres caractéristiques et avantages de l'invention apparaîtront à l'examen de la description détaillée ci-après, et des dessins annexés, sur lesquels :
- la figure 1 illustre de façon schématique un siège équipé d'une ceinture de sécurité à trois points,
- la figure 2 est une première photographie illustrant un exemple de réalisation d'un pêne retour de sangle selon l'invention, immobilisé par rapport à une boucle fixe et avec son carter fermé,
- la figure 3 est une deuxième photographie illustrant sous un premier angle un exemple de réalisation d'un pêne retour de sangle selon l'invention, immobilisé par rapport à une boucle fixe et avec son carter ouvert, et
- la figure 4 est une troisième photographie illustrant sous un second angle une partie du pêne retour de sangle de la figure 3 avec son carter ouvert.

Les dessins annexés pourront non seulement servir à compléter l'invention, mais aussi contribuer à sa définition, le cas échéant.

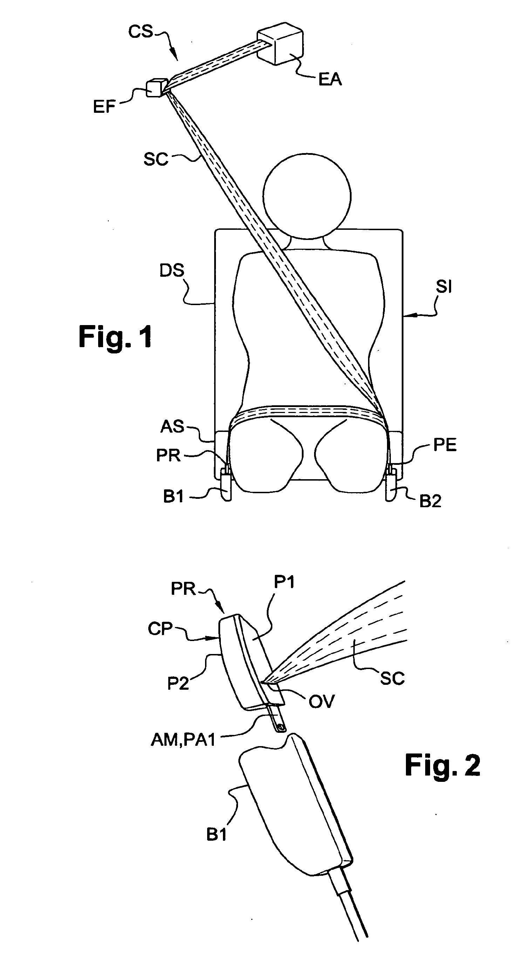

On a schématiquement représenté sur la figure 1 un exemple de ceinture de sécurité à trois points CS équipant un siège (ou une partie de banquette) SI d'un véhicule automobile. Le siège SI comprend classiquement une assise AS sur laquelle un passager peut s'asseoir et un dossier DS sur lequel ledit passager peut s'adosser. Ce siège SI est par exemple implanté dans une position centrale (médiane ou arrière) de l'habitacle du véhicule, et donc encadré par au moins un autre siège (ou une autre portion de banquette). Mais, il pourrait également être situé en position latérale.

La ceinture de sécurité CS comprend classiquement :
- un enrouleur automatique EA destiné à être fixé à la structure du véhicule et auquel est solidarisée une première extrémité d'une sangle SC de ceinture,
- un élément de fixation EF destiné à être fixé à la structure du véhicule, assurant le renvoi et le coulissement de la sangle SC,
- un pêne retour de sangle PR (objet de l'invention), destiné à être solidarisé fixement à une première boucle B1 destinée à être fixée à la structure du véhicule ou bien au siège SI et à laquelle est solidarisée la seconde extrémité (ES) de la sangle SC, et
- un pêne extractible PE dans lequel coulisse la sangle SC et destiné à être introduit par un passager dans une seconde boucle B2 destinée à être fixée à la structure du véhicule ou bien au siège SI et comportant un mécanisme de verrouillage amovible.

Comme cela est illustré sur les figures 2 à 4, le pêne retour de sangle PR, selon l'invention, comprend une âme AM, généralement en métal et de forme aplatie (comme une lame), et un carter CP, généralement en matière plastique (ou analogue).

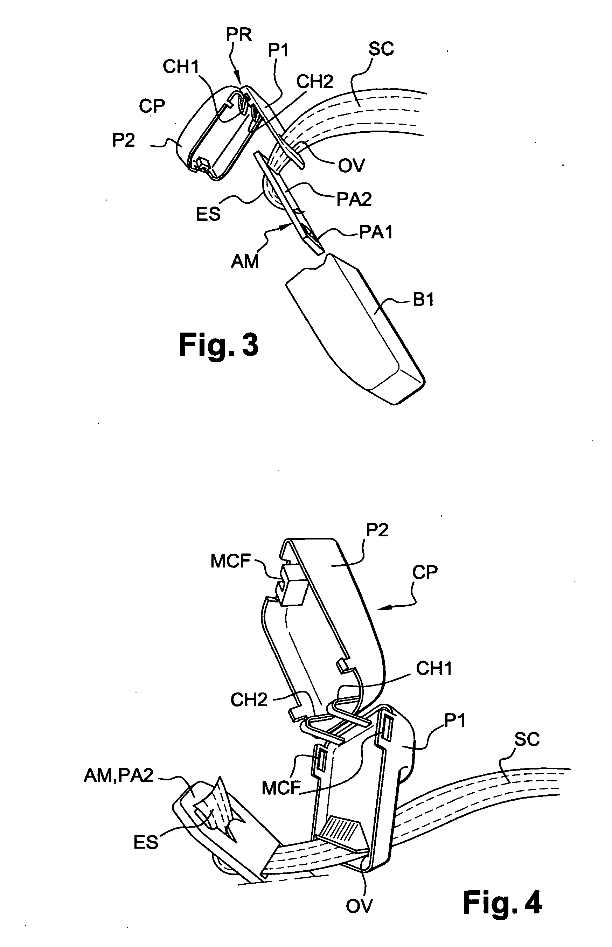

L'âme AM comporte, comme illustré sur la figure 3, deux portions PA1 et PA2. La première portion d'âme PA1 est destinée à être solidarisée fixement à la première boucle B1, par exemple par encliquetage. La seconde portion d'âme PA2 est destinée à être solidarisée à l'une des deux extrémités ES de la sangle SC. A cet effet, elle comprend par exemple deux ouvertures par lesquelles passe l'extrémité ES de la sangle SC, permettant ainsi de la maintenir étroitement et de la replier pour former une boucle fermée par des points de couture.

Le carter CP comprend tout d'abord des première P1 et seconde P2 parties destinées, une fois placées l'une en regard de l'autre (voir figure 2), à emprisonner conjointement la seconde portion d'âme PA2 afin de cacher l'extrémité ES de la sangle SC. Ces première P1 et seconde P2 parties constituent donc, en quelque sorte, deux demi-coques définissant, une fois assemblées, un logement interne dans lequel la seconde portion d'âme PA2 est logée étroitement. La première partie P1 du carter CP comporte une ouverture OV destinée à permettre le passage de l'extrémité ES de la sangle SC.

Afin de pouvoir être assemblées l'une à l'autre pour définir la cavité interne logeant la seconde portion d'âme PA2, les première P1 et seconde P2 parties du carter CP comprennent par exemple des moyens de clipsage et/ou des ergots ou plus généralement des moyens à coopération de forme MCF (comme illustré sur la figure 4).

Le carter CP comprend également des moyens de liaison CHi flexibles (ou souples) qui joignent entre elles ses première P1 et seconde P2 parties de façon permanente, y compris avant qu'elles ne définissent conjointement le logement interne de la seconde portion d'âme PA2.

Par exemple, les moyens de liaison CHi sont agencés sous la forme d'au moins une charnière. Dans l'exemple de réalisation illustré sur les figures 3 et 4, les moyens de liaison CHi comprennent deux charnières CH1 et CH2 (i = 1 ou 2), mais ils pourraient n'en comporter qu'une seule.

Comme illustré, chaque charnière CHi comprend une première extrémité qui est par exemple solidarisée à une partie d'extrémité de la première partie de carter P1, située du côté opposé à la première portion d'âme PA1, et une seconde extrémité qui est par exemple solidarisée à une partie d'extrémité de la seconde partie de carter P2, située également du côté opposé à la première portion d'âme PA1.

Il est important de noter que chaque charnière CHi pourrait être solidarisée aux première P1 et seconde P2 parties du carter CP en d'autres endroits que ceux occupés par leurs parties d'extrémité, comme par exemple des parties latérales (sensiblement perpendiculaires auxdites parties d'extrémité).

Il est également important de noter que les moyens de liaison CHi ne sont pas obligatoirement agencés sous la forme de charnière(s) CHi. En effet, tout moyen connu de l'homme de l'art et permettant de joindre (ou raccorder) de façon permanente les première P1 et seconde P2 parties du carter CP peut être envisagé. Ainsi, ils pourraient par exemple se présenter sous la forme de cordons ou liens (semi-)flexibles ou (semi-)souples.

Par ailleurs, et comme illustré sur les figures 3 et 4, chaque charnière CHi (ou moyen de liaison analogue) est de préférence logée intégralement à l'intérieur de la cavité interne qui est délimitée par les première P1 et seconde P2 parties du carter CP lorsqu'elles emprisonnent la seconde portion d'âme PA2. Cela permet de rendre les moyens de liaison CHi invisibles de l'extérieur. Pour ce faire, chaque charnière CHi est par exemple installée de façon dite inversée à l'intérieur de la cavité interne (comme illustré), ses deux extrémités opposées étant alors solidarisées à la face interne des parties d'extrémité respectives des première P1 et seconde P2 parties du carter CP.

Lorsque les moyens de liaison CHi sont agencés sous la forme de charnière(s), celle(s)-ci peu(ven)t faire partie intégrante des première P1 et seconde P2 parties du carter CP. Dans ce cas, le carter CP peut être avantageusement réalisé sous la forme d'un élément monobloc en matière plastique (comme dans l'exemple non limitatif illustré). Chaque charnière CHi constitue alors une espèce de pont en matière plastique, (semi-)flexible ou (semi-)souple et en forme de V ou de U. Un tel carter monobloc CP peut par exemple être réalisé au moyen d'un outillage d'injection.

Grâce à l'invention, lorsque le véhicule fait l'objet d'un choc qui induit une tension de la sangle SC de nature à écarter l'une de l'autre les première P1 et seconde P2 parties du carter CP, la seconde partie P2 ne peut plus être projetée dans l'habitacle et donc ne peut plus heurter un passager du fait qu'elle demeure rattachée via les moyens de liaison CHi à la première partie P1 qui est couplée à la sangle SC via son ouverture OV.

L'invention ne se limite pas aux modes de réalisation de pêne retour de sangle et de ceinture de sécurité à trois points décrits ci-avant, seulement à titre d'exemple, mais elle englobe toutes les variantes que pourra envisager l'homme de l'art dans le cadre des revendications ci-après.

## Revendications

1. Pêne (PR) pour une extrémité (ES) de sangle (SC) de ceinture de sécurité à trois points, ledit pêne (PE) comprenant une âme (AM) comportant une portion (PA2) propre à être solidarisée à ladite extrémité de sangle (ES) et un carter (CP) comprenant de première (P1) et seconde (P2) parties destinées à emprisonner conjointement ladite portion d'âme (PA), ladite première partie (P1) comportant une ouverture (OV) propre à permettre le passage de ladite extrémité de sangle (ES), **caractérisé en ce que** ledit carter (CP) comprend en outre des moyens de liaison (CHi) flexibles joignant entre elles, de façon permanente, lesdites première (P1) et seconde (P2) parties de sorte qu'elles demeurent rattachées l'une à l'autre tout en étant couplées à ladite sangle (SC) en cas de choc.

2. Pêne selon la revendication 1, **caractérisé en ce que** lesdits moyens de liaison (CHi) sont agencés pour être logés intégralement à l'intérieur dudit carter (CP) lorsque ce dernier emprisonne ladite portion d'âme (PA2).

3. Pêne selon l'une des revendications 1 et 2, **caractérisé en ce que** lesdits moyens de liaison (CHi) comprennent au moins une charnière.

4. Pêne selon la revendication 3, **caractérisé en ce que** lesdits moyens de liaison (CHi) comprennent deux charnières (CH1, CH2).

5. Pêne selon l'une des revendications 3 et 4, **caractérisé en ce que** chaque charnière (CHi) comprend deux extrémités solidarisées respectivement à des parties d'extrémité desdites première (P1) et seconde (P2) parties.

6. Pêne selon la combinaison des revendications 2 et 5, **caractérisé en ce que** chaque extrémité de charnière (CHi) est solidarisée à une face interne de la partie d'extrémité de la première (P1) ou seconde (P2) partie.

7. Pêne selon l'une des revendications 3 à 6, **caractérisé en ce que** ledit carter (CP) est un élément monobloc réalisé en matière plastique.

8. Pêne selon l'une des revendications 1 à 7, **caractérisé en ce qu'**en cas de choc ladite première partie (P1) est couplée à ladite sangle (SC) via son ouverture (OV).

9. Ceinture de sécurité à trois points (CS), **caractérisée en ce qu'**elle comprend une sangle (SC) munie d'une extrémité (ES) solidarisée à un pêne (PR) selon l'une des revendications précédentes.

## Claims

1. Fastening bolt (PR) for an end (ES) of a three-point seat belt strap (SC), the said fastening belt (PE) comprising a core (AM) comprising a portion (PA2) intended to be secured to the said strap end (ES) and a casing (CP) comprising first (P1) and second (P2) parts intended together to enclose the said core portion (PA), the said first part (P1) comprising an opening (OV) able to allow the said strap end (ES) to pass, **characterized in that** the said casing (CP) further comprises flexible connecting means (Chi) permanently joining the said first (P1) and second (P2) parts together so that they remain attached to one another while at the same time being coupled to the said strap (SC) in the event of an impact.

2. Fastening bolt according to Claim 1, **characterized in that** the said connecting means (Chi) are designed to be fully housed inside the said casing (CP) when the latter is enclosing the said core portion (PA2).

3. Fastening bolts according to one Claims 1 and 2, **characterized in that** the said connecting means (Chi) comprise at least one hinge.

4. Fastening bolt according to Claim 3, **characterized in that** the said connecting means (Chi) comprise two hinges (CH1, CH2).

5. Fastening bolt according to one of Claims 3 and 4, **characterized in that** each hinge (Chi) comprises two ends secured respectively to end parts of the said first (P1) and second (P2) parts.

6. Fastening bolt according to the combination of Claims 2 and 5, **characterized in that** each hinge end (Chi) is secured to an internal face of the end part of the first (P1) or second (P2) part.

7. Fastening bolt according to one of Claims 3 to 6, **characterized in that** the said casing (CP) is a one-piece element made of plastic.

8. Fastening bolt according to one of Claims 1 to 7, **characterized in that** in the event of an impact, the said first part (P1) is coupled to the said strap (SC) via its opening (OV).

9. Three-point seat belt (CS), **characterized in that** it comprises a strap (SC) fitted with an end (ES) secured to a fastening bolt (PR) according to one of the preceding claims.

## Patentansprüche

1. Riegel (PR) für ein Ende (ES) eines Gurts (SC) eines Dreipunkt-Sicherheitsgurts, wobei der Riegel (PR) einen Mittelteil (AM), der einen Abschnitt (PA2) aufweist, der geeignet ist, um mit dem Gurtende (ES) fest verbunden zu werden, und ein Gehäuse (CP) enthält, das erste (P1) und zweite Teile (P2) enthält, die dazu bestimmt sind, zusammen den Mittelteilabschnitt (PA2) zu umschließen, wobei der erste Teil (P1) eine Öffnung (OV) aufweist, die den Durchgang des Gurtendes (ES) erlauben kann, **dadurch gekennzeichnet, dass** das Gehäuse (CP) außerdem flexible Verbindungseinrichtungen (CHi) enthält, die den ersten (P1) und den zweiten Teil (P2) dauerhaft miteinander verbinden, so dass sie aneinander befestigt bleiben und gleichzeitig im Fall eines Stoßes mit dem Gurt (SC) gekoppelt sind.

2. Riegel nach Anspruch 1, **dadurch gekennzeichnet, dass** die Verbindungseinrichtungen (CHi) angeordnet sind, um vollständig im Inneren des Gehäuses (CP) aufgenommen zu werden, wenn letzteres den Mittelteilabschnitt (PA2) umschließt.

3. Riegel nach einem der Ansprüche 1 und 2, **dadurch gekennzeichnet, dass** die Verbindungseinrichtungen (CHi) mindestens ein Scharnier enthalten.

4. Riegel nach Anspruch 3, **dadurch gekennzeichnet, dass** die Verbindungseinrichtungen (CHi) zwei Scharniere (CH1, CH2) enthalten.

5. Riegel nach einem der Ansprüche 3 und 4, **dadurch gekennzeichnet, dass** jedes Scharnier (CHi) zwei Enden enthält, die mit Endbereichen des ersten (P1) bzw. des zweiten Teils (P2) fest verbunden sind.

6. Riegel nach der Kombination der Ansprüche 2 und 5, **dadurch gekennzeichnet, dass** jedes Scharnierende (CHi) fest mit einer Innenseite des Endbereichs des ersten (P1) oder zweiten Teils (P2) verbunden ist.

7. Riegel nach einem der Ansprüche 3 bis 6, **dadurch gekennzeichnet, dass** das Gehäuse (CP) ein aus Kunststoff hergestelltes, einstückiges Element ist.

8. Riegel nach einem der Ansprüche 1 bis 7, **dadurch gekennzeichnet, dass** im Fall eines Stoßes der erste Teil (P1) über seine Öffnung (OV) mit dem Gurt (SC) gekoppelt ist.

9. Dreipunkt-Sicherheitsgurt (CS), **dadurch gekennzeichnet, dass** er einen Gurt (SC) enthält, der mit einem Ende (ES) versehen ist, das fest mit einem Riegel (PR) nach einem der vorhergehenden Ansprüche verbunden ist.
